# EUROPEAN PATENT APPLICATION

(11) **EP 1 840 090 A2**
(43) Date of publication of application: **03.10.2007**
(21) Application number: 07104727.8
(22) Date of filing: 23.03.2007
(51) Int. Cl.: C02F 1/04, F03D 9/00, C02F 103/08

(54) **Hybrid water desalination system and method of operation**

(30) Priority: 28.03.2006 US 277657
(71) Applicant: General Electric Company, Schenectady, NY 12345 (US)
(72) Inventor: Krokoszinski, Hans-Joachim, 69226, Nussloch (DE); El-Barbari, Said Farouk Said, 85354, Freising (DE)
(74) Representative: Illingworth-Law, William Illingworth

(57) **Abstract**

A hybrid water desalination system (80) is provided. The desalination system (80) includes a wind turbine (82) configured to drive an electrical generator (84) for producing electrical power and a mechanical vapor compression (MVC) desalination unit (86) configured to receive electrical power from the electrical generator (84) for driving a compressor (24) of the desalination unit (86). The desalination system (80) also includes a first converter (90) coupled to the electrical generator (84) and a second converter (92) coupled to the compressor (24), wherein the first and second converters (90, 92) arc coupled via a common direct current (DC) link (94).

## Description

### BACKGROUND

The invention relates generally to a water desalination system, and more particularly, to a hybrid water desalination system powered by a renewable energy source.

Various types of desalination systems are known and are in use. Typically, such systems include a water pre-treatment system, a desalination unit and a post-treatment system. The desalination of seawater in such systems is achieved through thermal processes or through membrane processes. The thermal processes for seawater desalination include multistage-flash distillation (MSF), multi effect distillation (MED) and vapor compression (VC). Further, membrane processes include reverse osmosis (RO) and electrodialysis (ED) processes.

Certain desalination systems employ renewable energy sources for powering the desalination system. For example, a mechanical vapor compression (MVC) desalination system may be powered by a wind turbine. Typically, wind powering of a MVC desalination system may be achieved either by direct mechanical coupling of the turbine shaft to the compressor axle of the desalination system, or by generating electrical power that is utilized to drive the electrical compressor drive. However, the mechanical coupling does not provide any means for power regulation or speed control of the compressor drive.

Furthermore, the electrical compressor drive has considerable complexity in terms of dual frequency conversion. Typically, one or more converters are required for frequency conversion from generator to grid frequency. Further, additional converters are required for frequency conversion from grid frequency to an optimal compressor drive frequency. Additionally, a converter may be required for providing power supply to a heater of the seawater reservoir in the evaporator. Such systems therefore require a large number of converters that adversely affect the investment costs, reliability of the system and, thus, service and maintenance costs. As a result, the cost of water produced by such systems is substantially high.

Accordingly, there is a need for a hybrid water desalination system that has high system efficiency and reduced cost of water. Furthermore, it would be desirable to provide a desalination system with reduced number of power converters. Lowering the overall number of the power converters in the system will drastically reduce the investment cost and provide enhanced reliability.

### BRIEF DESCRIPTION

Briefly, according to one embodiment, a hybrid desalination system is provided. The desalination system includes a renewable energy source for producing electrical power and a desalination unit configured to receive electrical power from the renewable energy source for driving the desalination unit. The desalination system also includes a first converter coupled to the renewable energy source and a second converter coupled to the desalination unit, wherein the first and second converters are coupled via a common direct current (DC) link.

In another embodiment, a hybrid water desalination system is provided. The desalination system includes a wind turbine configured to drive an electrical generator for producing electrical power and a mechanical vapor compression (MVC) desalination unit configured to receive electrical power from the electrical generator for driving a compressor of the desalination unit. The desalination system also includes a first converter coupled to the electrical generator and a second converter coupled to the compressor, wherein the first and second converters are coupled via a common direct current (DC) link.

In another embodiment, a hybrid water desalination system is provided. The desalination system includes a photovoltaic generator configured to generate electrical power and a mechanical vapor compression (MVC) desalination unit configured to receive electrical power from the photovoltaic generator for driving a compressor of the desalination unit. The desalination system also includes a first converter coupled to the photovoltaic generator and a second converter coupled to the compressor, wherein the first and second converters are coupled via a common direct current (DC) link.

In another embodiment, a method of operating a hybrid water desalination system is provided. The method includes generating electrical power through a wind turbine and coupling the generated electrical power to drive a compressor of a MVC desalination unit via a common DC link of first and second converters coupled to the wind turbine and to the compressor.

In another embodiment, a method of operating a hybrid water desalination system is provided. The method includes generating electrical power through a photovoltaic generator and coupling the generated electrical power to drive a compressor of a MVC desalination unit via a common DC link of first and second converters coupled to the photovoltaic generator and to the compressor.

### DRAWINGS

These and other features, aspects, and advantages of the present invention will become better understood when the following detailed description of embodiments, provided by way of example only, is read with reference to the accompanying drawings in which like characters represent like parts throughout the drawings.

FIG. 1 is a diagrammatical illustration of a hybrid water desalination system powered by a renewable energy source.

FIG. 2 is a diagrammatical illustration of an existing wind powered hybrid water desalination system.

FIG. 3 is a diagrammatical illustration of a grid coupled wind powered hybrid water desalination system in accordance with certain aspects of the present invention.

FIG. 4 is a diagrammatical illustration of a grid coupled hybrid water desalination system powered by a photovoltaic generator in accordance with certain aspects of the present invention.

FIG. 5 is a diagrammatical illustration of an off-grid wind powered hybrid water desalination system in accordance with certain aspects of the present invention.

FIG. 6 is a diagrammatical illustration of an off-grid hybrid water desalination system powered by a photovoltaic generator in accordance with certain aspects of the present invention.

FIG. 7 is a diagrammatical illustration of an off-grid wind powered hybrid water desalination system having energy storage capability in accordance with certain aspects of the present invention.

FIG. 8 is a diagrammatical illustration of an off-grid hybrid water desalination system powered by a photovoltaic generator having energy storage capability in accordance with certain aspects of the present invention.

FIG. 9 is a diagrammatical illustration of another embodiment of an off grid wind powered hybrid water desalination system in accordance with certain aspects of the present invention.

### DETAILED DESCRIPTION

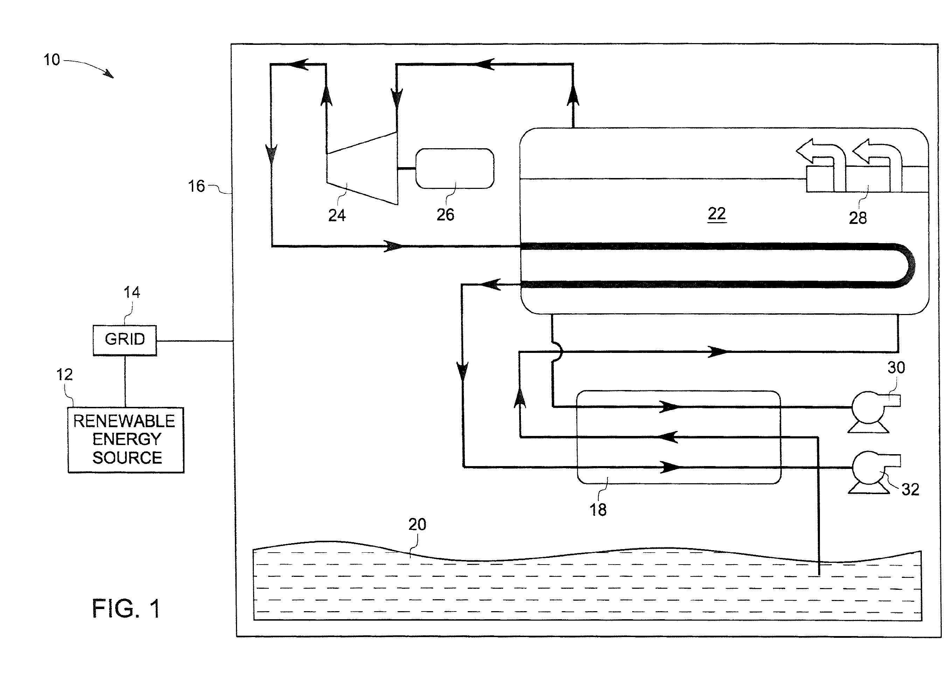

As discussed in detail below, embodiments of the present invention function to provide a hybrid desalination system that has high system efficiency and low cost of water. In particular, the present invention provides a desalination system powered by a renewable energy source that has a reduced number of power converters thereby enabling reduced cost of investment and higher reliability. Turning now to the drawings and referring first to FIG. 1, a hybrid water desalination system 10 powered by a renewable energy source 12 is illustrated. In the illustrated embodiment, the electrical power generated from the renewable energy source 12, such as a wind turbine, may be coupled to a grid 14 to power a mechanical vapor compression (MVC) desalination unit 16. The MVC desalination unit 16 includes a heat recuperation exchanger 18 to preheat seawater throughput 20. The seawater 20 is heated in the heat recuperation exchanger 18 by a hot discharge of brine blowdown and the distillate.

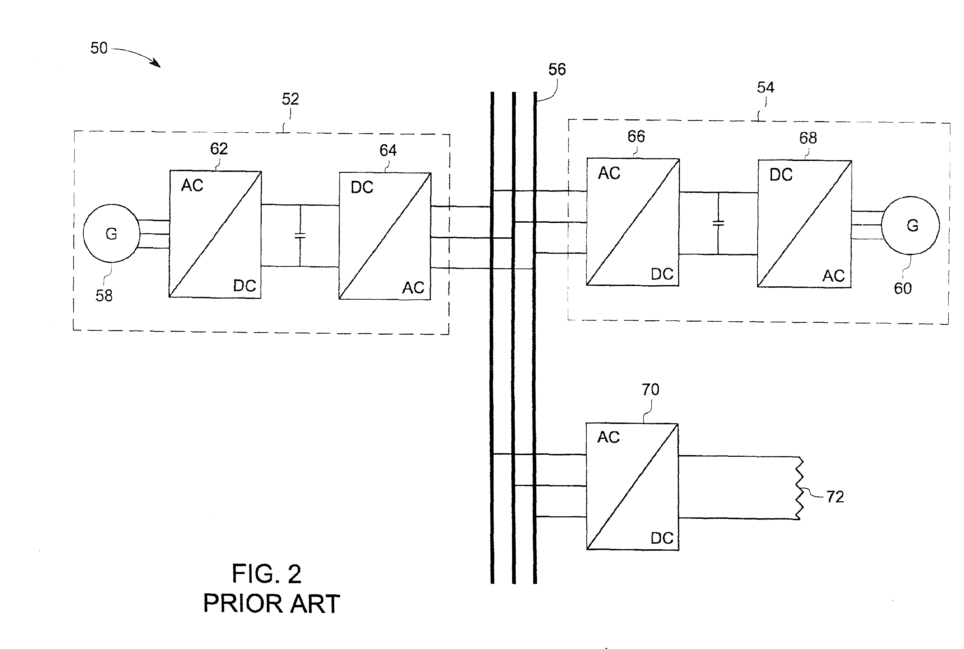

Further, the preheated seawater enters an evaporator 22 where it is heated up to its boiling point and some of it is evaporated. The water vapor formed in the evaporator is introduced into a compressor 24 after its droplets produced by a separator 28 are removed. The compressor 24 is driven by an electric motor 26 and is configured to increase a pressure and consequently a saturation temperature of the water vapor. The compressed vapor from the compressor 24 is then fed back into the evaporator 22 to be condensed, providing the thermal energy to evaporate the applied seawater. Further, the distilled water produced by this condensation leaves the MVC desalination unit as the product water. Thus, the condensed vapor from fresh water is extracted along with the concentrated brine that contains the salt, as represented by reference numerals 30 and 32. In this embodiment, the MVC desalination unit 16 is powered by a wind turbine. In another exemplary embodiment, the MVC desalination unit 16 is powered by a photovoltaic generator. It should be noted that to achieve speed control in the hybrid desalination system 10 by combining an off-the-shelf wind turbine with frequency converter via a grid connection requires four conversion steps, as illustrated by an exemplary existing system in FIG. 2.

FIG. 2 is a diagrammatical illustration of an existing wind powered hybrid water desalination system 50. The desalination system 50 includes a wind turbine 52 that drives a MVC desalination unit 54 of the desalination system 50. Further, a grid 56 is coupled to the wind turbine 52 and to the MVC desalination unit 54. The grid 56 is configured to operate the MVC desalination unit 54 in a turbine downtime condition. In the illustrated embodiment, the wind turbine 52 includes an electrical generator 58 for generating electrical power. In this exemplary embodiment, to achieve speed control by combining an off-the-shelf wind turbine 52 with frequency converter via the grid connection to a motor drive 60 of the MVC desalination unit 54 requires four conversion steps. The steps include conversion from AC to DC, DC to AC, AC to DC and DC-AC. To achieve these conversion steps, the desalination unit 50 includes at least four converters, such as represented by reference numerals 62, 64, 66 and 68. In addition, the desalination unit may include a fifth converter 70 for providing electrical power to a heating element 72 for heating the seawater 20 (see FIG. 1) in the evaporator 22 (see FIG. 1). Thus, the existing wind powered desalination system 50 may require as many as five converters for achieving the frequency conversion in the system 50.

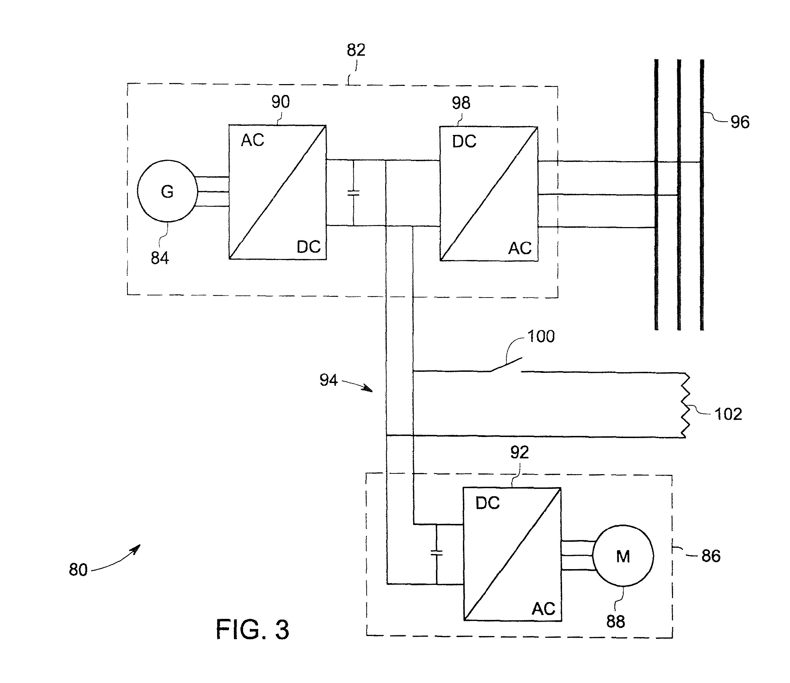

As will be appreciated by one skilled in the art, the high number of power converters has an adverse effect both on investment cost and on reliability and thus, service and maintenance cost. As a result, the cost of water (CoW) is relatively higher as compared to other desalination systems. Further, the system efficiency may be substantially reduced due to the electrical losses in the power converters. Such disadvantages of the system 50 may be overcome by exemplary hybrid water desalination systems as described below with reference to FIGS. 3-9.

FIG. 3 is a diagrammatical illustration of a grid coupled wind powered hybrid water desalination system 80 in accordance with certain aspects of the present invention. The desalination system 80 includes a wind turbine 82 configured to drive an electrical generator 84 for producing electrical power. Further, the desalination system 80 includes a MVC desalination unit 86 configured to receive electrical power from the electrical generator 84 for driving an electric motor 88 of a compressor of the desalination unit 86. In the illustrated embodiment, the desalination system includes a first converter 90 coupled to the electrical generator 84 and a second converter 92 coupled to the compressor motor 88. The first and second converters 90 and 92 are coupled to one another via a common DC link 94. In this embodiment, the first converter 90 includes an AC-DC converter and the second converter 92 includes a DC-AC converter.

In addition, the desalination system 80 includes an optional grid 96 coupled to the electrical generator 84 via a third converter 98. In this exemplary embodiment, the third converter 98 includes a DC-AC converter that is coupled to the first converter 90. In certain embodiments, the MVC desalination unit 86 is operated via electrical power from the grid 96 in a condition when the wind turbine 82 does not produce any or the required power for driving the MVC desalination unit 86. For example, the electrical power from the grid 96 may be utilized to operate the MVC desalination unit 86 during a turbine downtime condition, or a system start-up condition.

As described before, with reference to FIG. 1, the compressor 24 of the MVC desalination unit 86 is configured to compress vapor generated by evaporation of preheated feed water in the evaporator 22 (see FIG. 1). In the illustrated embodiment, the desalination system 80 (Fig. 3) includes a DC chopper 100 coupled to the DC link 94 for providing electrical power to a water heater 102 for heating the feed water in the evaporator 22. In this embodiment, the DC chopper 100 includes a semi conductor switch. The DC chopper 100 facilitates dissipation of wind power exceeding the nominal power of the load for water preheating in the evaporator 22. Further, the desalination system 80 may be optimized according to power maximization both on the generator side and the load side (or compressor side). Typically, the load is controlled to match the produced wind power from the wind turbine 82. It should be noted that if the nominal power of the compressor is reached and the produced wind power exceeds this limit, then the excess power may be dumped in the DC chopper 100 for water preheating. In an exemplary embodiment, if this auxiliary load also reaches it's a predefined limit, or the water temperature reaches a desired temperature, then the power of the wind turbine 82 may be reduced on a rotor side of the turbine 82.

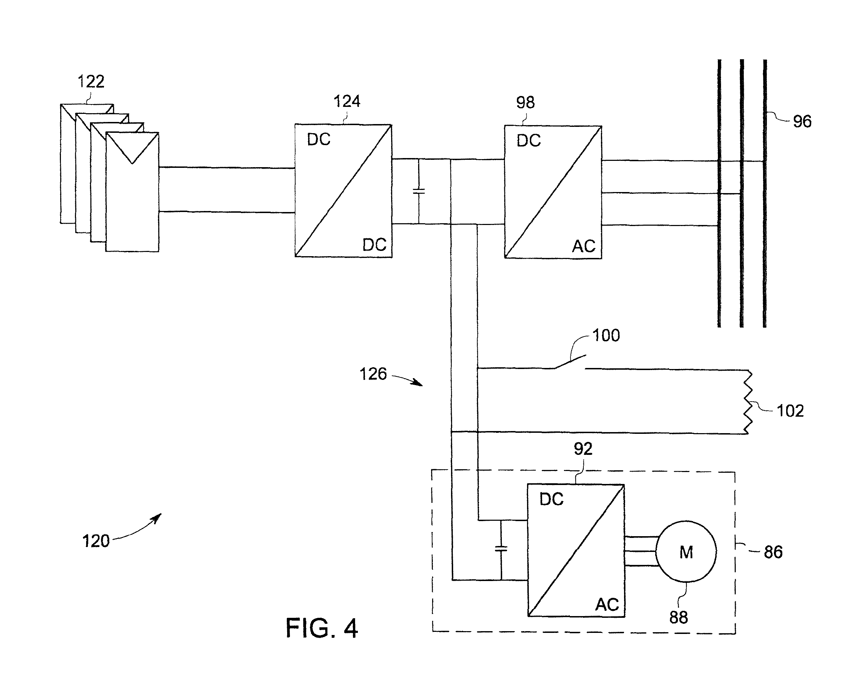

The desalination system 80 described above requires a reduced number of power converters while retaining the flexibility by variable speed control of the system 80. In certain embodiments, the wind turbine 82 of the desalination system 80 may be replaced or supplemented with a photovoltaic generator for driving the MVC desalination unit 86 as will be described below with reference to FIG. 4.

FIG. 4 is a diagrammatical illustration of a grid coupled hybrid water desalination system 120 powered by a photovoltaic generator 122 in accordance with certain aspects of the present invention. The photovoltaic generator 122 is configured to generate electrical power for driving the electric motor 88 of the compressor of the desalination unit 86. In the illustrated embodiment, the desalination system 120 includes a first converter 124 coupled to the photovoltaic generator 122 and the second converter 92 coupled to the compressor motor 88. In this exemplary embodiment, the first converter 124 includes a DC-DC converter. Further, the first and second converters 124 and 92 are coupled via a common DC link 126.

In addition, the grid 96 is coupled to the photovoltaic generator 122 via the third converter 98, which is a DC-AC converter. Again, the electrical power from the grid 96 may be utilized to operate the MVC desalination unit 86 when the photovoltaic generator 122 does not produce enough power for driving the MVC desalination unit 86. Furthermore, as described in the embodiment illustrated in FIG. 3, the DC chopper 100 coupled to the DC link 126 may dissipate excess electrical power to the water heater 102 for heating the feed water.

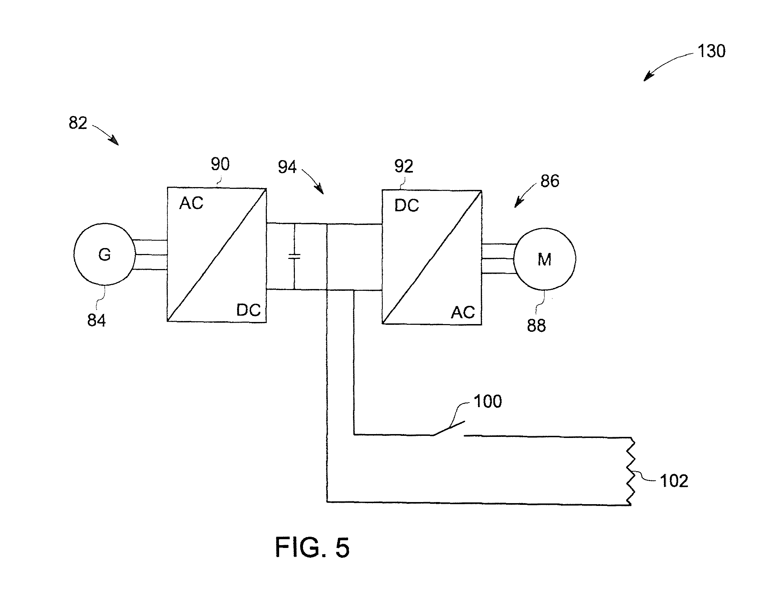

FIG. 5 is a diagrammatical illustration of an off-grid wind powered hybrid water desalination system 130 in accordance with certain aspects of the present invention. In this exemplary embodiment, the first and second converters 90 and 92 are coupled to the electrical generator 84 and the compressor motor 88 respectively and are coupled to one another via the common DC link 94. In this configuration the desalination system 130 is completely decoupled from the grid 96 (see FIGS 3 and 4) and the only DC-AC converter on the DC link 94 is the second converter 92, which is the variable speed compressor motor drive inverter. Thus, the system 130 employs only two conversion steps to drive the compressor with variable speed. Again, the DC chopper 100 facilitates coupling of excess power from the DC link 94 to the water heater 102 in the evaporator 22 (see FIG. 1).

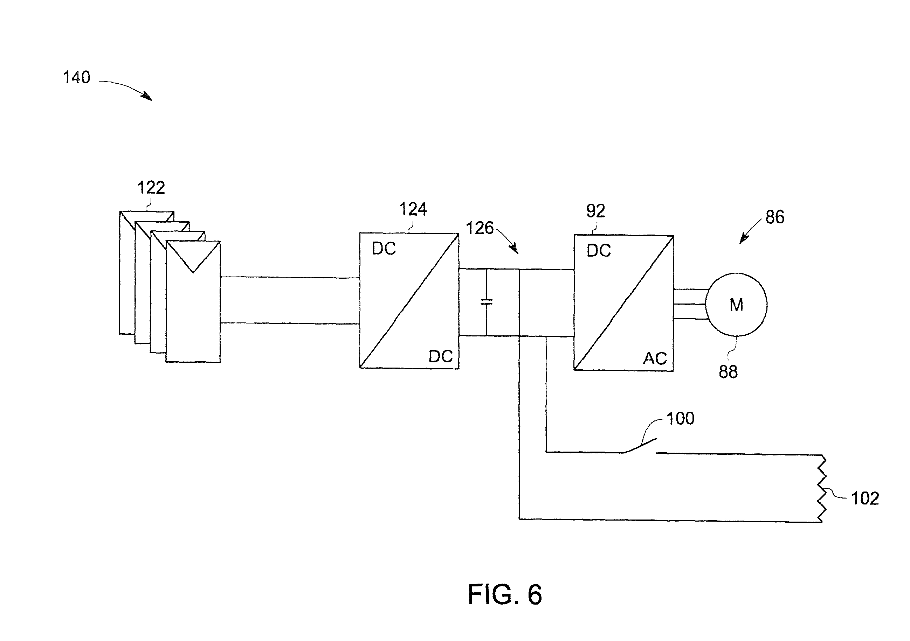

FIG. 6 is a diagrammatical illustration of an off-grid hybrid water desalination system 140 powered by the photovoltaic generator 122 in accordance with certain aspects of the present invention. In this exemplary embodiment, the first and second converters 124 and 92 are coupled to the photovoltaic generator 122 and the compressor motor 88 respectively and are coupled to each other via the common DC link 126. Again, as described in the embodiment illustrated in FIG. 5, the desalination system 140 is completely decoupled from the grid 96 (see FIGS. 3 and 4) and the only DC-AC converter on the DC link 126 is the second converter 92 and the system 140 employs only two conversion steps to drive the compressor of the MVC desalination unit 86.

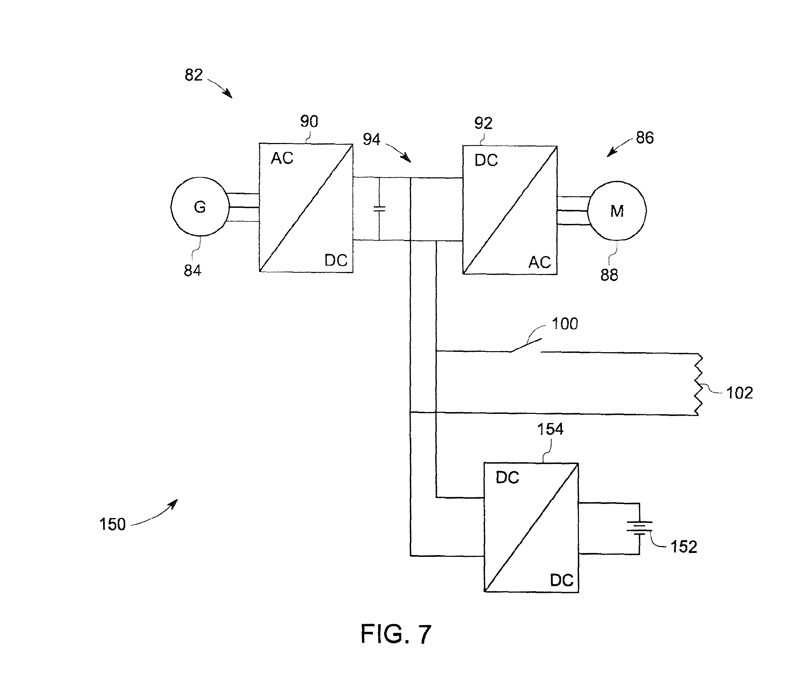

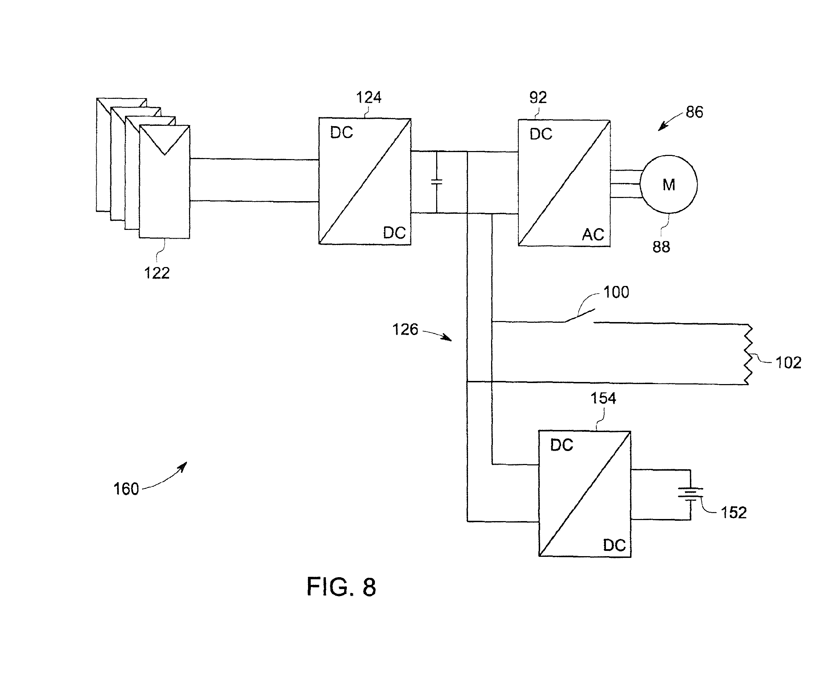

The desalination systems illustrated in FIGS. 5 and 6 are powered by the renewable energy sources such as wind turbine and the photovoltaic generator and are completely decoupled from the grid. In certain embodiments, an energy storage element may be coupled to such systems in order to account for power outages, turbine downtimes due to low wind or service and maintenance operations. FIGS. 7 and 8 illustrate exemplary configuration of hybrid water desalination systems having energy storage capability to provide auxiliary power to the system.

FIG. 7 is a diagrammatical illustration of an off-grid wind powered hybrid water desalination system 150 having energy storage capability in accordance with certain aspects of the present invention. In the illustrated embodiment, the desalination system 150 includes an energy storage element 152 coupled to the common DC link 94 through a DC-DC converter 154. The energy storage element 152 is configured to store a portion of electrical power generated by the wind turbine 82. Such stored electrical power may be utilized to provide auxiliary power for a system start-up condition, or for a turbine downtime condition. Examples of energy storage element 152 include a battery bank, a flow battery, an electrolyzer hydrogen tank fuel cell system and so forth. In certain embodiments, the power from energy storage element 152 may be utilized to enable water production even in outage times of the wind turbine 152.

FIG. 8 is a diagrammatical illustration of an off-grid hybrid water desalination system 160 powered by the photovoltaic generator 122 and having energy storage capability in accordance with certain aspects of the present invention. As with the embodiment illustrated in FIG.7, the desalination system 160 also includes the energy storage element 152 coupled to the common DC link 126 through the DC-DC converter 154. The energy storage element 152 is configured to store a portion of the electrical power generated by the photovoltaic generator 122 and to provide auxiliary power for a system start-up condition, or when the power generated by the photovoltaic generator 122 is not enough to drive the MVC desalination unit 86.

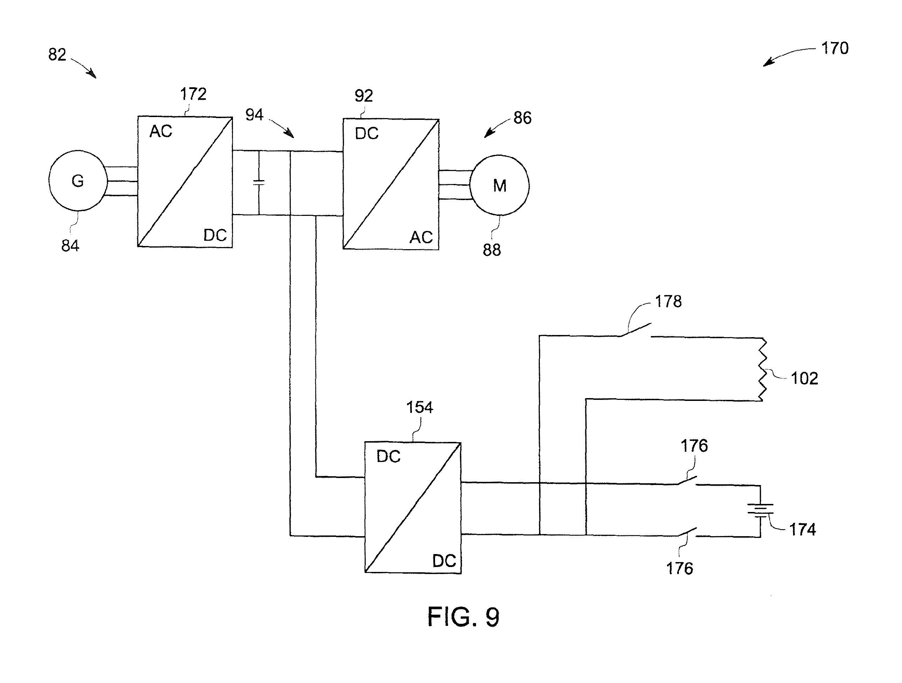

FIG. 9 is a diagrammatical illustration of another embodiment of an off-grid wind powered hybrid water desalination system 170 in accordance with certain aspects of the present invention. In the illustrated embodiment, the water desalination system 170 includes a six-pulse diode rectifier 172 coupled to the electrical generator 84 and the DC-AC converter 92 coupled to the compressor motor 88. Further, the six-pulse diode rectifier 172 and the DC-AC converter 92 are coupled via the common DC link 94. In addition, the desalination system 170 includes an energy storage element such as a battery tank 174 for storing a portion of the electrical power from the wind turbine 82. The energy storage element 174 is coupled to the common DC link 94 via the DC-DC converter 154. The desalination system 170 also includes a circuit disconnector coupled to the water heater 102 and to the energy storage element 174 for controlling the energy dissipation. The circuit disconnector includes disconnect switches such as represented by reference numerals 176 and 178. In an exemplary embodiment, if the energy storage element 174 is fully charged the disconnect switches 176 will disconnect the energy storage element 174 and excess energy will dissipate in the water heater 102.

The various aspects of the method described hereinabove have utility in hybrid desalination systems powered by renewable energy sources such as wind turbine and photovoltaic generators. As noted above, the hybrid desalination systems described above enable reduced power conversion steps while retaining the full functionality and flexibility of the system. Advantageously, the reduced number of power converters substantially reduces the investment cost and provides higher reliability due to reduced parts count. Further, having reduced number of power converter enhances the system efficiency by reducing the electrical losses in the system.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A hybrid desalination system (10), comprising:
a renewable energy source (12) for producing electrical power;
a desalination unit (16) configured to receive electrical power from the renewable energy source (12) for driving the desalination unit; and
a first converter (90) coupled to the renewable energy source (12) and a second converter (92) coupled to the desalination unit (16), wherein the first and second converters (90, 92) are coupled via a common direct current (DC) link (94).

2. A hybrid water desalination system (80), comprising:
a wind turbine (82) configured to drive an electrical generator (84) for producing electrical power;
a mechanical vapor compression (MVC) desalination unit (86) configured to receive electrical power from the electrical generator (84) for driving a compressor (24) of the desalination unit (86); and
a first converter (90) coupled to the electrical generator (84) and a second converter (92) coupled to the compressor (24), wherein the first and second converters (90, 92) are coupled via a common direct current (DC) link (94).

3. The desalination system (80) of claim 1 or claim 2, wherein the first converter (90) comprises an AC-DC converter and the second converter (92) comprises a DC-AC converter.

4. A hybrid water desalination system (120), comprising:
a photovoltaic generator (122) configured to generate electrical power;
a mechanical vapor compression (MVC) desalination unit (86) configured to receive electrical power from the photovoltaic generator (122) for driving a compressor (24) of the desalination unit (120); and
a first converter (124) coupled to the photovoltaic generator (122) and a second converter (92) coupled to the compressor (24), wherein the first and second converters (122, 92) are coupled via a common direct current (DC) link (126).

5. The desalination system (120) of claim 4, wherein the first converter (124) comprises a DC-DC converter and the second converter (92) comprises a DC-AC converter.

6. A hybrid water desalination system (170), comprising:
a wind turbine (82) configured to drive an electrical generator (84) for producing electrical power ;
a mechanical vapor compression (MVC) desalination unit (86) configured to receive electrical power from the electrical generator (84) for driving a compressor (24) of the desalination unit (86); and
a six-pulse diode rectifier (172) coupled to the electrical generator (84) and a DC-AC converter (92) coupled to the compressor (24), wherein the six-pulse diode rectifier (172) and the DC-AC converter (92) are coupled via a common direct current (DC) link (94).

7. A method of operating a hybrid water desalination system, comprising:
generating electrical power through a wind turbine; and
coupling the generated electrical power to drive a compressor of a MVC desalination unit via a common DC link of first and second converters coupled to the wind turbine and to the compressor.

8. A method of operating a hybrid water desalination system, comprising:
generating electrical power through a photovoltaic generator; and
coupling the generated electrical power to drive a compressor of a MVC desalination unit via a common DC link of first and second converters coupled to the photovoltaic generator and to the compressor.

9. A hybrid water desalination system (80), comprising:
a wind turbine (82) configured to drive an electrical generator (84) for producing electrical power ;
a mechanical vapor compression (MVC) desalination unit (86) configured to receive electrical power from the electrical generator (84) for driving a compressor (24) of the desalination unit (86);
a first converter (90) coupled to the electrical generator (84) and a second converter (92) coupled to the compressor (24), wherein the first and second converters (90, 92) are coupled via a common direct current (DC) link (94); and
a grid (96) coupled to the generator (84) via a third converter (98), wherein the third converter (98) comprises a DC-AC converter coupled to the first converter (90).

10. A hybrid water desalination system (120), comprising:
a photovoltaic generator (122) configured to generate electrical power;
a mechanical vapor compression (MVC) desalination unit (86) configured to receive electrical power from the photovoltaic generator (122) for driving a compressor (24) of the desalination unit (86);
a first converter (124) coupled to the photovoltaic generator (122) and a second converter (92) coupled to the compressor (24), wherein the first and second converters (124, 92) are coupled via a common direct current (DC) link (126); and
a grid (96) coupled to the photovoltaic generator (122) via a third converter (98), wherein the third converter (98) comprises a DC-AC converter coupled to the first converter (124).
